# EUROPEAN PATENT APPLICATION

(11) **EP 4 572 013 A1**
(43) Date of publication of application: **18.06.2025**
(21) Application number: 24217847.3
(22) Date of filing: 05.12.2024
(51) Int. Cl.: H01Q 9/04, H01Q 1/24, H01Q 1/22, H04B 7/15, H01Q 1/12, H01Q 1/34, H04B 7/14

(54) **WIRELESS COMMUNICATION DEVICE AND WIRELESS COMMUNICATION METHOD USING THE SAME**

(30) Priority: 07.12.2023 KR 20230176865
(71) Applicant: ZN Technologies Co., Ltd., Busan 46744 (KR)
(72) Inventor: KIM, Dongtak, 22711 Incheon (KR); PARK, Chulgyun, 06707 Seoul (KR); KANG, Changsoo, 17012 Yongin-si, Gyeonggi-do (KR); KIM, Beomsoo, 16560 Suwon-si, Gyeonggi-do (KR)
(74) Representative: Modiano, Gabriella Diana

(57) **Abstract**

Disclosed are a wireless communication device and a wireless communication method using the same. An antenna device included in the wireless communication device may include an antenna plate, a ground plate supporting the antenna plate, and an impedance matching circuit for impedance matching of the antenna device. The area of the upper surface of the antenna plate may be formed at a predesignated ratio according to a resonant frequency for communication, and the impedance matching of the antenna device may be adjusted based on the distance between a feeding line and a ground line connected to the antenna plate.

## Description

### CROSS-REFERENCE TO RELATED APPLICATION

This application claims the benefit of Korean Patent Application No. 10-2023-0176865 filed on December 7, 2023, in the Korean Intellectual Property Office, the entire disclosure of which is incorporated herein by reference for all purposes.

### BACKGROUND

### 1. Field of the Invention

The present disclosure relates to a wireless communication device and a wireless communication method using the same.

### 2. Description of the Related Art

Vessels are made of metal, which may hinder wireless communication in vessels. Therefore, most vessels use wired communication systems with cables. However, such wired communication networks require holes drilled in bulkheads of vessels and cables tens of kilometers long, which incurs considerable installation and maintenance costs. In addition, despite the wired communication networks installed, vessels still have communication dead zones where communication between crew members or workers is impossible, which may threaten the safety of the crew members or workers. Vessels also require power cables to supply power to various devices. As described above, vessels have numerous cables for wired communication networks and power supply and thus, require high costs of installing and maintaining the cables.

In addition to the vessels described above, refrigerated containers (including cold chain control), large vehicles, chemical complexes or large-scale plant facilities, large metal structures such as oil pipelines, and the like also have the same or similar issues.

### SUMMARY

According to an aspect, there is provided an antenna device including an antenna plate, a ground plate supporting the antenna plate, and an impedance matching circuit for impedance matching of the antenna device, wherein an area of an upper surface of the antenna plate may be formed at a predesignated ratio according to a resonant frequency for communication, and the impedance matching of the antenna device may be adjusted based on a distance between a feeding line and a ground line connected to the antenna plate.

The antenna plate may be grounded to the ground plate.

The antenna device may further include a communication circuit configured to determine whether communication is possible by analyzing signals transmitted and received through the antenna plate.

The communication circuit may be configured to identify a bit error rate by analyzing a signal received through the antenna plate, and determine whether communication is possible based on a result of comparing the identified bit error rate and a threshold value.

According to an aspect, there is provided a wireless communication device including the antenna device, a processor configured to process signals transmitted and received through the antenna device, and a communication module configured to transmit the signals processed by the processor to a communication terminal device.

Additional aspects of embodiments will be set forth in part in the description which follows and, in part, will be apparent from the description, or may be learned by practice of the disclosure.

### BRIEF DESCRIPTION OF THE DRAWINGS

These and/or other aspects, features, and advantages of the invention will become apparent and more readily appreciated from the following description of embodiments, taken in conjunction with the accompanying drawings of which:
FIG. 1 is a diagram illustrating an example of a wireless communication device installed in a vessel according to an embodiment;
FIG. 2 is a block diagram illustrating components of a wireless communication device including an antenna according to an embodiment; and
FIGS. 3A, 3B, 3C, and 3D are structural views of an antenna device according to an embodiment.

### DETAILED DESCRIPTION

The following detailed structural or functional description is provided as an example only and various alterations and modifications may be made to the embodiments. Accordingly, the embodiments are not construed as limited to the disclosure and should be understood to include all changes, equivalents, and replacements within the idea and the technical scope of the disclosure.

Terms, such as first, second, and the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

It should be noted that if it is described that one component is "connected", "coupled", or "joined" to another component, a third component may be "connected", "coupled", and "joined" between the first and second components, although the first component may be directly connected, coupled, or joined to the second component.

The singular forms "a", "an", and "the" are intended to include the plural forms as well, unless the context clearly indicates otherwise. As used herein, "A or B," "at least one of A and B," "at least one of A or B," "A, B or C," "at least one of A, B and C," and "at least one of A, B, or C," each of which may include any one of the items listed together in the corresponding one of the phrases, or all possible combinations thereof. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined, all terms used herein including technical or scientific terms have the same meaning as commonly understood by one of ordinary skill in the art to which examples belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

As used in connection with the present disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

The term "unit" or the like used herein may refer to a software or hardware component, such as a field-programmable gate array (FPGA) or an ASIC, and the "unit" performs predefined functions. However, the term "unit" is not limited to software or hardware. The "unit" may be formed so as to be in an addressable storage medium, or may be formed so as to operate one or more processors. Thus, for example, the term "unit" may include elements such as software elements, object-oriented software elements, class elements and task elements, processes, functions, attributes, procedures, subroutines, segments of program code, drivers, firmware, micro-codes, circuits, data, a database, data structures, tables, arrays, or variables. Functions provided by the elements and "units" may be combined into a smaller number of elements and "units", or may be divided into additional elements and "units". Furthermore, the elements and "units" may also be implemented to operate one or more central processing units (CPUs) in a secure multimedia card or a device. In addition, a "unit" may include one or more processors.

Hereinafter, embodiments will be described in detail with reference to the accompanying drawings. In describing the embodiments with reference to the accompanying drawings, like reference numerals refer to like components, and a repeated description related thereto will be omitted.

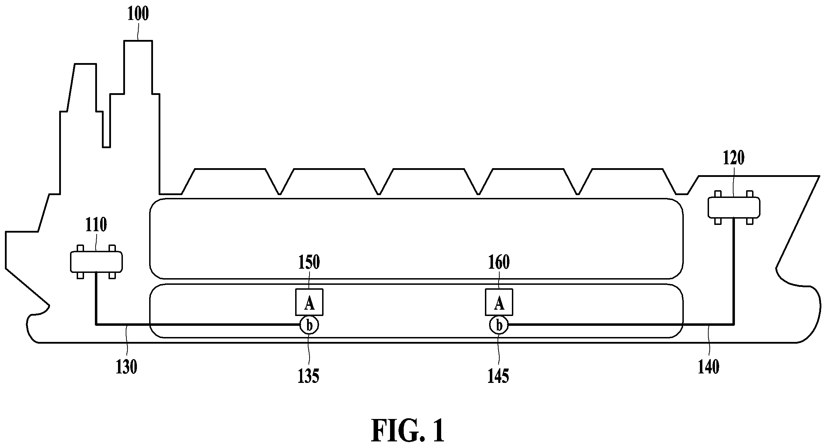

FIG. 1 is a diagram illustrating an example of a wireless communication device installed in a vessel according to an embodiment.

Referring to FIG. 1, wireless communication devices 110 and 120 according to an embodiment may perform communication using a metal body as a medium. The wireless communication devices 110 and 120 may provide a communication relay function through communication using the metal body as a medium. A wireless communication device may receive signals and/or data from a communication terminal device (e.g., a radio like such as a walkie-talkie) connected to the wireless communication device and transmit the received signal and/or data to another wireless communication device using a metal body as a medium. The wireless communication devices 110 and 120 may effectively perform wireless communication using the metal body as a medium in a communication dead environment in which communication using radio waves is hindered by a metal body, such as a vessel, a container, or a trailer. The wireless communication devices 110 and 120 may include an antenna device attached to a metal hull of a vessel 100 to form an electromagnetic field in the metal hull and propagate voice data received from a data processor (e.g., a processor) with the voice data loaded on the electromagnetic field through the metal body. The antenna device of the wireless communication devices 110 and 120 may receive signals and/or data transmitted in the electromagnetic field through the metal body, and the wireless communication devices 110 and 120 may transmit the received signals and/or data to the communication terminal device through communication channels.

The principle of transmitting signals and/or data through a metal body is as follows. The metal body medium may be, for example, a steel plate or frame structure of a hull. A case where the metal body medium is magnetic and a case where the metal body medium is diamagnetic will be described separately.

### Case Where Metal Body Medium Is Magnetic

Conductive layers of a first antenna form an electromagnetic field in a dielectric layer. Then, this electromagnetic field forms an electromagnetic field in which the magnetic field is dominant in a metal body medium which is a propagation medium. Of the generated electromagnetic field, an electric field E1 propagates in a perpendicular direction to the metal body medium through an aperture of the first antenna. The propagated electric field E1 forms an electromagnetic field B in which the magnetic field is dominant in the metal body medium.

Then, according to the theory of reversibility, a second antenna of a receiver receives energy from the electromagnetic field formed in the metal body medium, with a similar structure and principle. During this process, a change in the electromagnetic field B in which the magnetic field is dominant is transferred through an aperture of the second antenna from the dielectric layer to an electromagnetic field E2 in which the electric field is dominant.

In such communication using a metal body as a medium (also referred to as metal body communication), the magnetic field is dominant, and thus, the impedance has a small change even if the shape and size of the metal body medium change. In addition, the metal body medium has a greater magnetic permeability than air and thus, has a more excellent radio wave transmission efficiency than a communication system that transmits waves through the air. Therefore, the range of communication through a metal body medium that is magnetic is larger than that of the magnetic field communication through the air. To form an electromagnetic field in which the magnetic field is dominant, a resonator and a circuit portion of a wireless relay device need to be designed so that the resonator and the circuit portion form an electric field in a predetermined size in a metal body.

The electromagnetic field formed in the metal body medium may enable energy transmission even to a resonator that is a predetermined distance apart from the metal body medium. In the electromagnetic field formed in the metal medium, the magnetic field is dominant, and thus, the electric field is radiated from the metal body medium. Accordingly, an antenna resonating at an operating frequency may receive the energy if the antenna is within a predetermined distance from the metal body medium.

A dielectric of the dielectric layer of the first antenna or the second antenna may miniaturize the thickness and size of the resonator, and form the electromagnetic field B in which the magnetic field is dominant in the metal body medium, so that sufficient energy may be transferred.

### Case Where Metal Body Medium Is Paramagnetic or Diamagnetic

A current fed to a conductive layer forms an electromagnetic field E1 in which the electric field is dominant in a metal body medium. At this time, the electric field radiated from an aperture fails to form an electromagnetic field B in which the magnetic field is dominant in the metal body medium. This is because a paramagnetic substance and a diamagnetic substance have similar magnetic permeabilities to air. Therefore, in the case of a paramagnetic or diamagnetic metal body medium, the propagation of the magnetic field in the air is not stronger than, but similar to, that of a ferromagnetic metal body medium. In other words, the propagation distance is similar even in the air or in the metal body.

Pure iron, which is ferromagnetic, has a magnetic permeability of 4000 to 5000, whereas aluminum, which is paramagnetic, or silver (Ag), which is diamagnetic, has a magnetic permeability of about 1.0, indicating the strength of magnetic field propagation in the metal body may vary. Accordingly, in this case, a signal is propagated from a layer in contact with the metal body medium, among conductive layers of an antenna, to a receiver by a current induced in the metal body medium. At this time, the electric field radiated from the aperture may be induced in the metal body, whereby a signal or power may be transmitted.

In the case of a structure mainly with a metal structure, such as the vessel 100 (e.g., a liquefied natural gas (LNG) carrier) shown in FIG. 1, radio waves may not pass through metal and may be reflected and/or attenuated, such that wireless communication may not be performed smoothly. Accordingly, the structure with the metal structure may have wireless communication dead zones where wireless communication is difficult or disabled. For example, the pipe duct, the engine room, the bosun store, the engine control room (ECR), and the bow thruster room of the LNG carrier may have wireless communication dead zones. At this time, the most required are relay devices that can be used between an area where radio waves are easily radiated in the air and general wireless communication is performed smoothly, such as the cargo control room (CCR), the bridge, the living quarter including the compass deck, or the upper dock, and wireless communication dead zones. The wireless communication devices 110 and 120 according to an embodiment may perform a relay function to relay communication between wireless communication enabled zones and wireless communication dead zones.

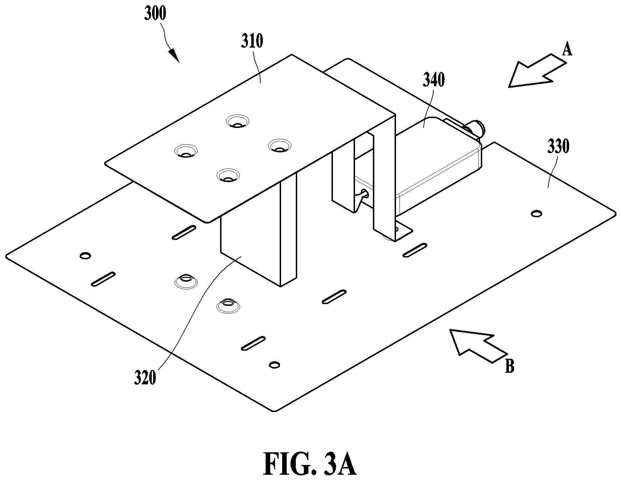

It may be impossible to install the wireless communication devices 110 and 120 at some locations in the vessel 100. The wireless communication devices 110 and 120 may be installed at locations where the wireless communication devices 110 and 120 can be installed in the vessel 100, and antennas 150 and 160 (e.g., an antenna device 300 of FIG. 3A) proposed herein may be installed using cables 130 and 140 (e.g., radio frequency (RF) cables). The antenna 150 may be connected to the wireless communication device 110 using the cable 130, and the antenna 160 may be connected to the wireless communication device 120 using the cable 140. In an explosion-proof zone, the antennas 150 and 160 may be installed using RF barriers (or RF couplers) 135 and 145.

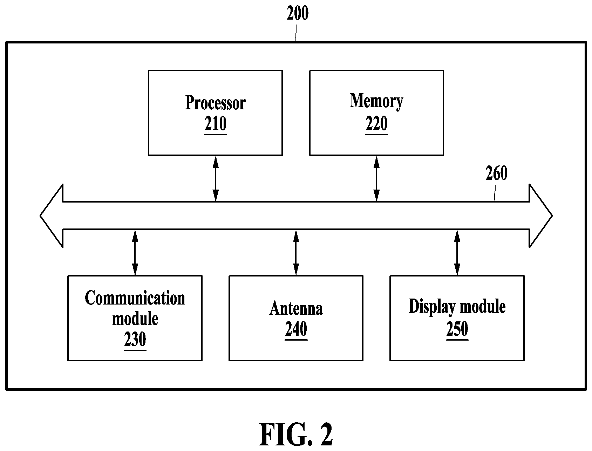

FIG. 2 is a block diagram illustrating components of a wireless communication device including an antenna according to an embodiment.

Referring to FIG. 2, a wireless communication device 200 may correspond to the wireless communication device (e.g., the wireless communication devices 110 and 120 of FIG. 1) described herein. The wireless communication device 200 may include a processor 210, a memory 220, a communication module 230, an antenna 240(e.g., the antennas 150 and 160 of FIG. 1 or the antenna device 300 of FIG. 3A), and a display module 250. The components of the wireless communication device 200 may communicate with each other through a communication bus 260. In an embodiment, a portion (e.g., the display module 250) of the components may be omitted from the wireless communication device 200, or another component may be added thereto.

The processor 210 may control another component (e.g., a hardware or software component) of the wireless communication device 200, and may perform a variety of data processing or computation. According to an embodiment, as at least part of data processing or computation, the processor 210 may store instructions or data received from another component in the memory 220, process the instructions or data stored in the memory 220, and store result data in the memory 220.

The processor 210 may include a main processor (e.g., a central processing unit (CPU) or an application processor (AP)) or an auxiliary processor (e.g., a graphics processing unit (GPU), a neural processing unit (NPU), an image signal processor (ISP), a sensor hub processor, or a communication processor (CP)) that is operable independently of, or in conjunction with the main processor.

The memory 220 may store a variety of data used by a component (e.g., the processor 210 or the communication module 230) of the wireless communication device 200. The data may include, for example, a program (e.g., an application), input data and/or output data for instructions related thereto, and signals and/or data received from a communication terminal device. The memory 220 may store instructions executable by the processor 210. The memory 220 may include a volatile memory or a non-volatile memory.

The communication module 230 may support the establishment of a direct (e.g., wired) communication channel or a wireless communication channel between the wireless communication device 200 and another device (e.g., another wireless communication device or the communication terminal device), and support the communication through the established communication channel. The communication module 230 may include a communication circuit configured to perform a communication function. The communication module 230 may include a CP that operates independently of the processor 210 and supports direct (e.g., wired) or wireless communication. The communication module 230 may include a wireless communication module for performing wireless communication and/or a wired communication module.

The processor 210 may control, by executing the instructions stored in the memory 220, the wireless communication device 200 to perform one or more operations of the wireless communication device described herein.

In an embodiment, the processor 210 may verify whether communication through the wireless communication device 200 is possible. The processor 210 may determine a communication sensitivity by analyzing the signal and/or data received through the antenna 240, and predict whether communication is possible based on the determined communication sensitivity. Whether communication is possible and/or the communication sensitivity (communication quality information) may be displayed through the display module 250. For example, the processor 210 may determine a received signal strength indicator (RRSI) of the signal and/or data received through the antenna 240, and determine the communication sensitivity based on the value of the RSSI. As the RSSI is greater, the communication sensitivity may be determined to be better. As another example, the processor 210 may check a bit error rate of a received signal (e.g., digital signal), and display, through the display module 250, that communication is possible until the bit error rate is less than or equal to a predetermined threshold value. For example, it may be determined that communication is impossible if the bit error rate exceeds 3%, but embodiments are not limited to the specific value. The bit error rate may indicate how many bits are fragmented in the received signal or how many errors occur.

In addition, the communication terminal device may also determine the communication sensitivity for the communication with the wireless communication device 200, and predict whether communication is possible based on the predicted communication sensitivity. Whether communication is possible and/or the communication sensitivity (communication quality information) may be displayed through a display portion (e.g., a display) of the communication terminal device. The communication terminal device may check a bit error rate of a received signal (e.g., digital signal) received from the wireless communication device 200, and display, through the display portion, that communication is possible until the bit error rate is less than or equal to a predetermined threshold value.

The proposed wireless communication system may provide a function to relay a signal of the same communication channel. The communication terminal device (e.g., a digital radio terminal) may typically have a function to transmit/receive a voice signal or a data signal, but signal transmission may not be performed well in wireless communication dead zones. To expand the communication range of such communication terminal devices, a device that relays signals of the same channel and transmits signals to a long distance (e.g., the wireless communication device 200) may be applied to the wireless communication system.

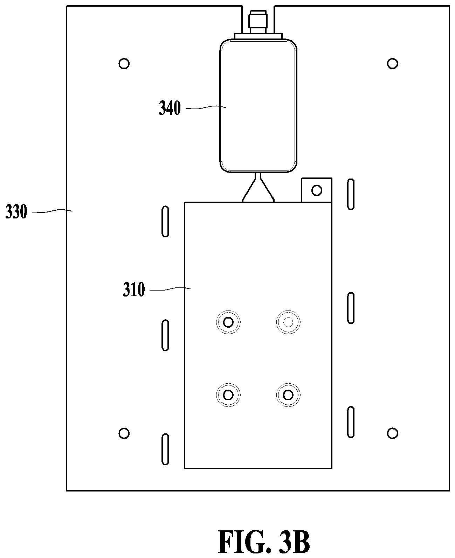

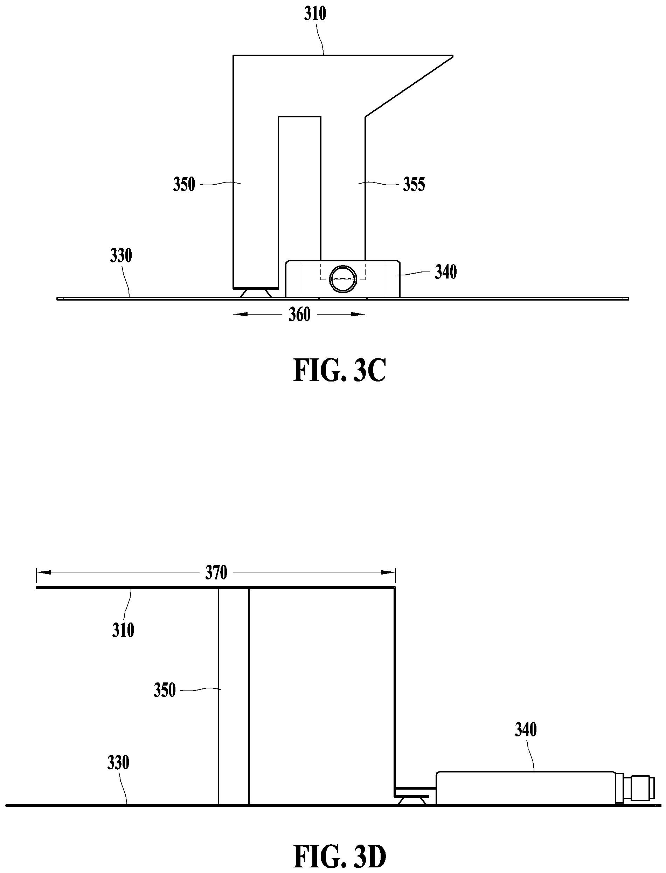

FIGS. 3A, 3B, 3C, and 3D are structural views of an antenna device according to an embodiment.

FIG. 3A is a perspective view of the antenna device according to an embodiment, and FIG. 3B is a plan view of the antenna device according to an embodiment. FIG. 3C is a side view of the antenna device, viewed in the direction A shown in FIG. 3A, according to an embodiment, and FIG. 3D is a side view of the antenna device, viewed in the direction B shown in FIG. 3A, according to an embodiment.

Referring to FIGS. 3A, 3B, 3C, and 3D, an antenna device 300 may function as the antenna of the wireless communication device (e.g., the wireless communication devices 110 and 120 of FIG. 1 or the wireless communication device 200 of FIG. 2) described herein. In an embodiment, the antenna device 300 may have a height of a predesignated range (e.g., the height from a ground plate 330 to an antenna plate 310).

The ground plate 330 may support the antenna plate 310 and be in contact with a target metal surface. The ground plate 330 may include, for example, a ground brass considering a target frequency for communication. The ground plate 330 may function as an antenna body. The area of the antenna plate 310 may be formed at a predesignated ratio according to a resonant frequency required for communication. By adjusting the area of the antenna plate 310, an antenna appropriate for any resonant frequency may be designed. The antenna plate 310 may be grounded to the ground plate 330. The length 370 of the upper surface of the antenna plate 310 may correspond to the antenna length of the antenna device 300. Impedance matching of the antenna device 300 may adjust the matching value through an impedance matching circuit, and a gap or distance 360 between a feeding line 355 and a ground line 350. A circuit (e.g., including the processor 210 of FIG. 2) connected to the antenna device 300 may predict whether communication is possible by analyzing a signal received through the antenna device 300.

The antenna device 300 may include a support portion 320 to maintain a predetermined distance between the ground plate 330 and the antenna plate 310 and support the antenna plate 310. The support portion 320 may include, for example, an auxiliary dielectric of a non-metallic material (e.g., polycarbonate (PC)), and may maintain the height of the metal of the antenna plate 310 constant. In the antenna device 300, the degree of impedance matching of the antenna may be adjusted using the gap between the ground line 350 and the feeding line 355. Further, a desired antenna usage frequency may be selected by adjusting the length 370 of the antenna plate 310.

The antenna device 300 may further include an impedance matching circuit (not shown) for impedance matching of the antenna device 300, and the impedance matching circuit may be protected by a shield portion 340. The shield portion 340 may include, for example, an aluminum material, and the impedance matching circuit may be disposed in the shield portion 340. The impedance matching circuit may be connected with the feeding line 355. The antenna plate 310 and the ground plate 330 may include high-conductivity materials, and may be electrically conductive to each other. The propose antenna device 300 may have the advantage of providing a wide bandwidth when attached to a metal plate.

The antenna device 300 according to an embodiment may include the antenna plate 310, the ground plate 330 supporting the antenna plate 310, and the impedance matching circuit for impedance matching of the antenna device 300. The area of the upper surface of the antenna plate 310 may be formed at a predesignated ratio according to a resonant frequency for communication. Impedance matching of the antenna device 300 may be adjusted based on the distance between the feeding line 355 and the ground line 350 connected to the antenna plate 310. The antenna plate 310 may be grounded to the ground plate 330. The antenna device 300 may further include a communication circuit configured to determine whether communication is possible by analyzing signals transmitted and received through the antenna plate 310. The communication circuit may identify a bit error rate by analyzing a signal received through the antenna plate 310, and determine whether communication is possible based on a result of comparing the identified bit error rate and a threshold value. The impedance matching circuit may be disposed in the shield portion 340 including a metallic material.

A wireless communication device (e.g., the wireless communication device 200 of FIG. 2) according to an embodiment may include the antenna device 300, the processor 210 configured to process signals transmitted and received through the antenna device 300, and the communication module 230 configured to transmit the signals processed by the processor 210 to a communication terminal device. The wireless communication device including the antenna device 300 according to an embodiment may be used in fields as follows, but is not limited thereto.

### <Vessels>

Vessels are made of metal, which hinders wireless communication in vessels.

Therefore, most vessels use wired communication systems with cables. However, such wired communication networks require holes drilled in bulkheads of vessels and cables tens of kilometers long, which incurs considerable installation and maintenance costs. In addition, despite the wired communication networks installed, vessels still have communication dead zones, which threatens the safety of the crew members or workers.

Autonomous vessels and smart ships are recent issues, and various and numerous sensors are required to implement those ships. These sensors require cables for communication, and as smart functions are demanded, more sensors and more cables are needed. The cables incur a significant cost. Ultimately, the need for data communication in vessels grows, and the costs associated with cables are increasing.

In addition, power lines for power transmission to various devices are supplied by cables. Accordingly, vessels have numerous cables for wired communication and power lines, and the costs of installing and maintaining the cables are high.

Warships encounter similar issues, with even more serious issues related to the cost of wired communication networks and the time required for shipbuilding, as they include more bulkheads than merchant vessels.

To solve the above issues, the present disclosure may remove cables for wired communication networks in vessels and replace the wired communication networks with wireless communication networks. By replacing wired networks with wireless networks, costs associated with cables may be reduced. Specifically, as the cost associated with cable installation is reduced, the cost of shipbuilding, the time required for shipbuilding, and the cost of cable maintenance are also reduced. As the weight of cables is reduced, the weight of vessels is also reduced, which lowers fuel costs.

Additionally, communication issues arising from accelerated smart technology for vessels may be solved with wireless networks, facilitating the smooth and successful implementation of smart technology. Moreover, according to the present disclosure, power may be supplied wirelessly, and thus, it is possible to eliminate numerous power lines in vessels, resulting in significant cost savings.

The proposed wireless communication device may enable wireless communication relay in structures where conventional wireless communication is impossible or difficult. Accordingly, the cost for cable wiring in wireless dead zones/environments and the structure weight may be greatly reduced.

### <Containers>

A typical example of transporting and storing goods through a space shielded by metal is a container. A container is a rectangular metal crate used for efficient and economical freight transport. In various current industrial sites, different types of loading containers are used to transport large quantities of goods more quickly. Containers enable the convenient transportation of various goods.

Meanwhile, when containers are used for international exports or imports, or when goods requiring specific environmental conditions are stored in containers, it may be necessary to continuously monitor the internal conditions of the containers. Recently, there has been an increased need for real-time monitoring of location information, internal temperature and humidity, shock levels, door openings, and deviations from the transport route for global land/sea transport container freight. There is also growing demand for quality services such as safe (anti-theft) freight transport and freight status information.

The issues with conventional management systems are as follows.

First, the conventional management systems failed to consider both internal and external factors. The goods loaded on a container may be affected not only by environmental factors inside the container but also by external factors (e.g., the inflow of outside air). For example, when the internal environment of a container is controlled using refrigerants to maintain a low temperature, issues may arise not only from the deterioration of the refrigerants (internal factor) but also from the failure to maintain an appropriate temperature due to the escape of cold air through the gap between the door and the body of the container (e.g., door opening) (external factor).

Second, the conventional management systems failed to manage containers in consideration of priority. When multiple containers are used to transport goods, some containers may need to be managed with higher priority. If priority is not considered, management issues may arise.

Third, refrigerated containers require continuous power supply, and devices for smart containers also require power. To this end, power cables are always necessary, and when containers are moved, the power supply may be cut off, causing issues in freight management. Additionally, batteries for container devices also need to be charged but are not easy to charge.

Fourth, real-time monitoring in vessels is difficult due to wireless communication issues, and communication is not smooth, particularly in lower containers of container ships.

The present disclosure may enable communication between the inside and outside of a container through the proposed wireless communication device, allowing for monitoring the inside of the container and tracking its location. Additionally, the present disclosure enables wireless charging, thereby ensuring continuous power supply and battery charging. Thus, it may be easy to manage freight.

### <Rearview Cameras and Around-View of Vehicles>

As vehicles become larger, blind spots increase. Especially for large vehicles, the rear area, about 15 meters behind, is not visible without a rearview camera, which means that reversing always carries a potential risk. Traditional wired rearview cameras incur additional costs due to cable installation and maintenance. As vulnerabilities in externally exposed data cables (e.g., wiring damage or short circuits) and inefficiencies in installation (e.g., time and cost) have been pointed out, there is a continuous demand for wireless communication-based around-view systems. As a result, the limitations of traditional wired rearview cameras in terms of installation convenience, usability, and cost inefficiency have led to an increasing demand for wireless communication-based, detachable rearview cameras. However, existing radio frequency (RF) wireless communication technologies such as Zigbee, Bluetooth, and Wi-Fi face issues with applicability due to noise, interference from surrounding frequencies, and video interference, and are inappropriate in dead zones created due to radio diffraction. When containers are loaded, wireless communication is not smooth due to the metal bodies of the containers. Accordingly, a solution to overcome these issues is needed.

In the case of a container trailer, the tractor, the trailer, and the container are typically owned by different parties. A driver who needs a rearview camera or around-view system may be the owner of the tractor, and the driver should install the required camera on the trailer or container for each operation and remove the camera after the operation. Accordingly, such systems are inappropriate and inconvenient for users who work with different containers daily and thus, are not adopted in the market. In addition, original equipment manufacturers (OEMs) do not produce trailers together with vehicles, and thus, it is impossible to install an around-view system by default, and a driver needs to purchase and install one separately.

Furthermore, there is an increasing need for equipment that addresses blind spots in military vehicles to ensure stable mission execution. Installing an around-view system may enable areas that are not visible through rearview or side mirrors to be checked on a monitor, thus, it is an essential feature for military vehicles, which frequently perform missions. To address the weaknesses of existing wired and wireless communication-based cameras, a tactically superior wireless around-view system is needed.

The present disclosure may remove cables for a camera system for a vehicle and configure a rearview camera or an around-view system wirelessly by using the proposed wireless communication device. Further, the present disclosure may overcome the weakness of existing wireless communication methods, thereby increasing communication reliability, facilitating detachment, and overcoming the inefficiencies of conventional wired cameras.

### <Cold Chain Truck Control>

With the recent shift to a contactless society and the rapid increase in online deliveries, real-time monitoring of temperature and humidity maintenance, shock, and location for cold chain logistics (such as fresh food and pharmaceuticals) is emerging. To this end, a demand for smooth IoT data communication in trucks and enhanced safety is growing. Additionally, it is necessary to ensure the reliability of cold chain data during transport, such as controlling cold chain truck temperature data, and to enable proactive responses to potential temperature deviations during transport (e.g., preventing the spoilage of COVID-19 vaccines). However, existing communication methods fail to achieve real-time monitoring due to troubled communication between the inside and outside of a transport vehicle.

The present disclosure may enable real-time communication between the inside and outside a transport vehicle through the proposed wireless communication device, thereby monitoring cold chain data in real time and monitoring the freshness and location of freight.

### <Nuclear Power Plants>

The radiation zones in nuclear power plants are complexly structured with metal components, concrete walls, and the like. Since radio wave errors occur as a result, communication between radiation zones and non-radiation zones is typically established using cables. However, in the event of a radiation leak, the cables are degraded, and the wired communication network in the radiation zone is unavailable. Utilizing the communication function of the wireless communication device of the present disclosure, which uses various pipes in radiation zones as the communication medium, may establish an emergency communication network when the wired network fails.

### <Other Fields>

Chemical Plants, Factories, Construction Sites, Tanks, etc.: In these industrial sites, numerous pipes and metal structures cause radio wave interference, hindering wireless communication. This issue may be solved by using the wireless communication device of the present disclosure, which communicates using a metal body as a medium.

Buildings: Buildings have wireless communication dead zones such as underground parking lots. To address the dead zones, small base stations are installed, which requires significant costs of installing and maintaining cables. The wireless communication device of the present disclosure may use metal such as steel framework or pipes, thereby reducing such costs.

Additionally, buildings require many wired communication networks for firefighting safety. By using the wireless communication device of the present disclosure, the wired communication networks may be replaced with a simpler installation process and at a lower cost.

Oil Pipelines: To prevent oil leaks from oil pipelines, theft, and other issues, various devices are installed along oil pipelines. These devices use a wireless communication network to transmit data to a server. However, when the pipelines are buried underground, both wired communication and wireless communication are difficult. By using the wireless communication device of the present disclosure, which uses the metal bodies of the pipelines as a communication medium, it is possible to collect data smoothly from communication devices even from the underground.

A number of embodiments have been described above. Nevertheless, it should be understood that various modifications may be made to these embodiments. For example, suitable results may be achieved if the described techniques are performed in a different order, and/or if components in a described system, architecture, device, or circuit are combined in a different manner, and/or replaced or supplemented by other components or their equivalents.

Therefore, other implementations, other embodiments, and equivalents to the claims are also within the scope of the following claims.

## Claims

1. An antenna device comprising:
an antenna plate;
a ground plate supporting the antenna plate; and
an impedance matching circuit for impedance matching of the antenna device,
wherein an area of an upper surface of the antenna plate is formed at a predesignated ratio according to a resonant frequency for communication, and
the impedance matching of the antenna device is adjusted based on a distance between a feeding line and a ground line connected to the antenna plate.

2. The antenna device of claim 1, wherein the antenna plate is grounded to the ground plate.

3. The antenna device of claim 1, further comprising:
a communication circuit configured to determine whether communication is possible by analyzing signals transmitted and received through the antenna plate.

4. The antenna device of claim 3, wherein the communication circuit is configured to identify a bit error rate by analyzing a signal received through the antenna plate, and determine whether communication is possible based on a result of comparing the identified bit error rate and a threshold value.

5. A wireless communication device comprising:
the antenna device of claim 1;
a processor configured to process signals transmitted and received through the antenna device; and
a communication module configured to transmit the signals processed by the processor to a communication terminal device.
